# EUROPÄISCHE PATENTSCHRIFT

(11) **EP 3 181 813 B1**
(45) Veröffentlichungstag und Bekanntmachung des Hinweises auf die Patenterteilung: **05.01.2022**
(21) Anmeldenummer: 16201356.9
(22) Anmeldetag: 30.11.2016
(51) Int. Cl.: F01D 5/14

(54) **SCHWERPUNKTSFAEDELUNG VON LAUFSCHAUFELN**
CENTER-OF-GRAVITY THREADING OF ROTOR BLADES
FILETAGE CENTRÉ D'AUBES

(30) Priorität: 03.12.2015 DE 102015224151
(43) Veröffentlichungstag der Anmeldung: 21.06.2017
(73) Patentinhaber: MTU Aero Engines AG, 80995 München (DE)
(72) Erfinder: Schönhoff, Carsten, 80636 München (DE); Pernleitner, Martin, 85221 Dachau (DE); Wittig, Klaus, 85244 Röhrmoos (DE); Dopfer, Manfred, 85716 Unterschleissheim (DE); Wöhler, Marcus, 82266 Inning am Ammersee (DE); Schütte, Wilfried, 82041 Oberhaching-Furth (DE); Bichlmaier, Christoph, 86926 Greifenberg (DE); Stanka, Rudolf, 84431 Rattenkirchen (DE); Cleesattel, Norman, 85604 Zorneding (DE)

(56) Entgegenhaltungen:
- EP-A2- 1 258 597
- EP-A2- 1 507 064
- FR-A1- 3 014 942
- US-A1- 2013 224 049

## Beschreibung

Die Erfindung betrifft eine Laufschaufel für eine Fluggasturbine, mit einem Schaufelfußelement und einem Strahlablenkungsabschnitt, der sich in Schaufellängsrichtung an das Schaufelfußelement anschließt, wobei jeweilige Schwerpunkte von Schaufelquerschnittsflächen des Strahlablenkungsabschnitts auf einer gemeinsamen Fädelachse liegen. Bei dem Strahlablenkungsabschnitt handelt es sich typischer Weise um ein Schaufelblatt mit einer konvexen Saugseite, einer konkaven Druckseite, welche über eine Vorder- und Hinterkante miteinander verbunden sind. Die Schaufelquerschnittsflächen ergeben sich als Schnitte durch den Strahlablenkungsabschnitt mit um die Maschinenachse der Gasturbine konzentrisch angeordneten Zylinderflächen.

Richtungsangaben wie "Axial-" bzw. "axial", "Radial-" bzw. "radial" und "Umfangs-" sind grundsätzlich auf die Maschinenachse der Gasturbine bezogen zu verstehen, sofern sich aus dem Kontext nicht explizit oder implizit etwas anderes ergibt.

Bei der Entwicklung von Fluggasturbinen hat man erkannt, dass durch Entkoppelung der beiden Komponenten Niederdruckturbine und Fan, die üblich auf einer Welle sitzen, ein optimierter Betrieb ermöglicht werden kann. Bei solchen Fluggasturbinen sind die Niederdruckturbine und der Fan durch ein Untersetzungsgetriebe miteinander verbunden, wobei die Niederdruckturbine etwa dreimal schneller dreht als der Fan. Solche Niederdruckturbinen werden auch als schnelllaufende Niederdruckturbinen bezeichnet. Hierzu wird beispielhaft auf die US 2013/0224049 A1 verwiesen. Diese stellt den Gegenstand der Präambel des angehängten unabhängigen Anspruchs 1 dar.

Aufgrund der veränderten, insbesondere höheren Drehzahl der Niederdruckturbine verglichen mit herkömmlichen Flug-(Gasturbinen) sind die Laufschaufeln, welche an einem Rotor einer Turbinenstufe befestigt sind, höheren Fliehkräften ausgesetzt. Neben den erhöhten Fliehkräften, sind auch die Kräfte von anströmendem Heißgas zu berücksichtigen.

Bei herkömmlichen Fluggasturbinen ist es bekannt, die Fädelachse von Schaufelquerschnittsflächen gegenüber einer rein radialen Richtung (bezogen auf den Mittelpunkt der Gasturbine) um bis zu 5 Grad zu neigen, wobei optimale Neigungen im Bereich von etwa 2,5 bis 4,5° liegen für die langsamer drehenden herkömmlichen Niederdruckturbinen. Hierzu wird beispielhaft auf die EP 1 258 597 A2 verwiesen.

Weitere Ausgestaltungen von Laufschaufeln finden sich in der FR 3 014 942 A1 , der US 2013/224049 A1 und der EP 1 507 064 A2.

Es hat sich gezeigt, dass der Einsatz von herkömmlichen Laufschaufeln in Fluggasturbinen mit schnell laufenden Niederdruckturbinen dahingehend problematisch ist, dass in den Laufschaufeln lokale Spannungsspitzen aufgetreten sind und eine ungleichmäßige Auslastung der Laufschaufeln festgestellt werden konnte. Insgesamt ergeben sich bei solchen Laufschaufeln und deren Einsatz in schnell laufenden Rotoren einer Turbinenstufe ungünstige Spannungsverläufe.

Demgegenüber ist es Aufgabe der Erfindung, eine Laufschaufel für eine Gasturbine bereitzustellen, welche die genannten Nachteile überwindet und insbesondere für den Einsatz in schnell laufenden Niederdruckturbinen geeignet ist.

Diese Aufgabe wird gelöst durch die Laufschaufel gemäß Anspruch 1 und eine Fluggasturbine gemäß Anspruch 4 mit solchen Laufschaufeln.

Zur Lösung wird eine Laufschaufel vorgeschlagen, bei der die Fädelachse ausgehend von einem sich an das Schaufelfußelement anschließenden ersten Schwerpunkt einer ersten Schaufelquerschnittsfläche sich innerhalb eines Kegels erstreckt dessen Kegelspitze im ersten Schwerpunkt liegt und dessen Kegelhöhe sich orthogonal zur Ebene der Schaufelquerschnittsflächen erstreckt, wobei der Öffnungswinkel des Kegels größer als oder gleich 0,5° und kleiner oder gleich 2° beträgt.

Die Kegelhöhe erstreckt sich bei dieser Anordnung entlang der radialen Richtung der Gasturbine, so dass bei der vorgeschlagenen Konstruktion die Fädelachse in axialer Richtung bzw. Umfangsrichtung um maximal 1° von der Radialrichtung bzw. der Kegelhöhe abweicht. Die Kegelspitze ist in anderen Worten ausgedrückt im Schnittpunkt der Fädelachse mit einem inneren Ringraum der Turbine angeordnet. Es hat sich gezeigt, dass sich insbesondere bei schnell laufenden Niederdruckturbinen das Verhältnis zwischen Fliehkraft und der Kraft des anströmenden Heißgases verändert hat, so dass durch Laufschaufeln mit dem beschriebenen Aufbau eine gleichmäßigere Laufschaufelauslastung ohne lokale Spannungsspitzen erreicht werden kann. Die Abweichung der Fädelachse der Laufschaufel von der rein radialen Richtung erfolgt somit in einem sehr engen Bereich, was aber insbesondere für schnell drehende Rotoren einer Turbinenstufe von Vorteil ist.

Die Kegelhöhe erstreckt sich im angebrachten Zustand der Laufschaufel an der Gasturbine in radialer Richtung der Gasturbine.

Ferner ist es bevorzugt, dass sich die Fädelachse ausgehend vom ersten Schwerpunkt linear innerhalb des Kegels erstreckt.

Um den wirkenden Kräften von durchströmendem Heißgas entgegenzuwirken, wird vorgeschlagen, dass die Fädelachse im angebrachten Zustand der Laufschaufel an der Gasturbine bezogen auf die radiale Richtung in Gasströmungsrichtung in axialer Richtung der Gasturbine geneigt ist.

Um den Spannungsverlauf im Hinblick auf die wirkende höhere Fliehkraft zu optimieren, kann die Fädelachse im angebrachten Zustand der Laufschaufel an der Gasturbine bezogen auf die radiale Richtung in Umfangsrichtung der Gasturbine geneigt sein.

Da das Deckbandelement den radial äußeren Abschluss der Laufschaufel bildet und auf diesem ebenfalls Fliehkräfte wirken, wird vorgeschlagen, dass auch die Schwerpunkte von Querschnittsflächen des Deckbandelements auf der Fädelachse angeordnet sind.

Die Erfindung betrifft gemäß einem weiteren Aspekt eine Flugga s-turbine, die wenigstens eine Turbinenstufe mit einem Rotor umfasst, an dem in Umfangsrichtung mehrere nebeneinander angeordnete Laufschaufeln mit einem der oben genannten Merkmale angebracht sind.

Dabei ist eine Turbinenstufe Teil einer Niederdruckturbine, wobei die Niederdruckturbine mittels eines Untersetzungsgetriebes mit dem Fan der Fluggasturbine gekoppelt ist.

Ferner ist es bei einer Gasturbine bevorzugt, dass die jeweiligen Fädelachsen der Laufschaufeln zu einer jeweiligen radial durch den ersten Schwerpunkt der ersten Schaufelquerschnittsfläche verlaufenden Geraden gleich geneigt sind.

Die Erfindung wird nachfolgend unter Bezugnahme auf die anliegenden Figuren beispielhaft und nicht einschränkend beschrieben.
Fig. 1 zeigt ein Beispiel einer Laufschaufel einer Fluggasturbine in perspektivischer Darstellung.
Fig. 2 zeigt exemplarisch einen Laufschaufelquerschnitt.
Fig. 3 zeigt in den Teilfiguren A und B schematisch die relative Anordnung einer Fädelachse bezogen auf einen Kegel und einen schiefen Zylinder.
Fig. 4 zeigt zwei überlagerte Laufschaufelquerschnitte auf unterschiedlichen radialen Positionen entlang der Fädelachse der Laufschaufel.

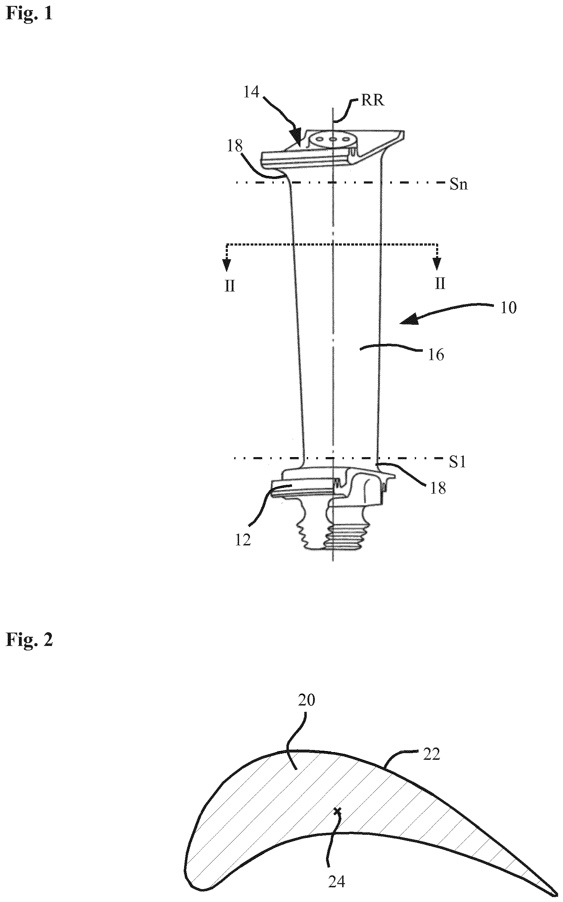

Figur 1 zeigt eine beispielhafte perspektivische Darstellung einer Laufschaufel 10 einer Fluggasturbine. Die Laufschaufel 10 umfasst ein Schaufelfußelement 12, ein Deckbandelement 14, und einen Strahlablenkungsabschnitt 16, der in Schaufellängsrichtung bzw. Radialrichtung RR zwischen dem Schaufelfußelement 12 und dem Deckbandelement 14 angeordnet ist. Der Strahlablenkungsabschnitt 16 weist radial innen und radial außen jeweilige Übergangsbereiche 18 auf, in denen sich die Querschnittsfläche verändert, insbesondere vergrößert im Hinblick auf eine stabile, vorzugsweise einstückige Verbindung mit dem Schaufelfußelement 12 bzw. dem Deckbandelement 14. Die hier dargestellte Laufschaufel 10 ist rein exemplarisch dargestellt, um den allgemeinen Aufbau einer Laufschaufel zu beschreiben. Die dargestellte Laufschaufel 10 der Figur 1 zeigt aber nicht zwingend alle Merkmale einer erfindungsgemäßen Laufschaufel 10.

Fig. 2 zeigt exemplarisch eine Querschnittsfläche 20 einer Laufschaufel 10, beispielsweise im Bereich der Schnittlinie II-II der Fig. 1. Die Schaufelquerschnittsfläche 20 ergibt sich vorzugsweise als Schnitt durch den Strahlablenkungsabschnitt 16 mit einer um die hier nicht dargestellte Maschinenachse der Gasturbine konzentrisch angeordneten Zylinderfläche. Vereinfacht kann diese Fläche jedoch auch flach in einer Ebene dargestellt werden. Die Querschnittsfläche 20 kann über die gesamte Länge des Strahlablenkungsabschnitts 16 gleich sein. Allerdings ist es auch denkbar, dass die Außenkontur 22 und somit auch die Querschnittsfläche 20 ausgehend von einer ersten Querschnittsfläche die sich etwa im Bereich der gestrichelten Linie S1 befinden kann, also oberhalb des Übergangsbereichs 18, bis zu einer radial äußersten Querschnittsfläche, die sich etwa im Bereich der gestrichelten Linie Sn befindet, verändert, je nach der gewünschten aerodynamischen Wirkung der Laufschaufel 10 bzw. des Strahlablenkungsabschnitts 16. Insbesondere kann die Querschnittsfläche, vorzugsweise monoton, nach radial außen kleiner werden. Dies hat Vorteile hinsichtlich der strukturmechanischen Anforderungen der Laufschaufeln 10.

Die Laufschaufelquerschnittsfläche 20 weist einen in der Figur qualitativ eingezeichneten Schwerpunkt 24 auf. Die Lage des Schwerpunktes 24 ist rein beispielhaft und nicht mathematisch bzw. geometrisch genau dargestellt. Durch diesen Schwerpunkt 24 erstreckt sich eine in Fig. 2 nicht dargestellte Fädelachse entlang der alle gedachten Querschnittsflächen aufeinander angeordnet bzw. aufgefädelt sind, wobei die Fädelachse durch die Schwerpunkte aller Querschnittsflächen hindurchgeht. Alle diese Schwerpunkte liegen dabei auf einer Geraden.

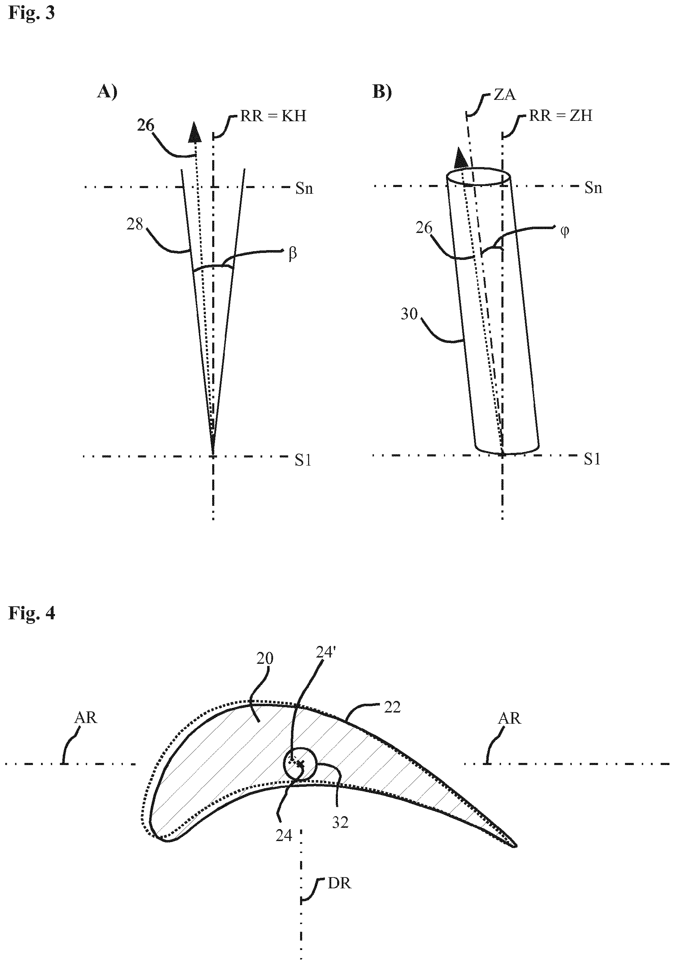

Fig. 3 zeigt in den Teilfiguren 3A und 3B geometrische Zusammenhänge zwischen der Fädelachse 26 und der radialen Richtung RR für eine Laufschaufel und ihre Querschnittsflächen. Gemäß Fig. 3A wird bei der Linie S1 der ersten Querschnittsfläche des Strahlablenkungsabschnitts 16 (Fig. 1) im Schwerpunkt 24 ein Durchstoßpunkt der radialen Richtung RR und der Fädelachse 26 festgelegt. Die Fädelachse 26 verläuft bezogen auf die Radialrichtung RR geneigt und weicht somit von der Radialrichtung RR ab. Im dargestellten Beispiel verläuft die Fädelachse 26 innerhalb eines Kegels 28, dessen Kegelspitze im Schwerpunkt 24 liegt und dessen Kegelhöhe KH mit der Radialrichtung RR zusammenfällt. Der Kegel 28 weist einen Öffnungswinkel β auf, der in einem Bereich von größer oder gleich 0,5° und kleiner oder gleich 2° liegt. Die Fädelachse 26, die bevorzugt einen linearen Verlauf hat ausgehend vom Schwerpunkt 24 der ersten Querschnittsfläche auf dem radialen Niveau S1, liegt innerhalb der Mantelfläche des Kegels 28. Die Fädelachse 26 kann somit in Umfangsrichtung oder/und in axialer Richtung der Gasturbine geneigt zur Radialrichtung RR verlaufen, wobei die Abweichung von der Radialrichtung nicht mehr als 1° beträgt, was dem halben Öffnungswinkel β des Kegels 28 entspricht.

Alternativ kann die Fädelachse 26 außerhalb der vorliegenden Erfindung innerhalb eines schiefen Zylinders 30 verlaufen, wobei der schiefe Zylinder eine Zylinderhöhe ZH aufweist, die mit der radialen Richtung RR zusammenfällt und dessen Zylinderachse ZA unter einem Winkel ϕ von größer 0° bis 2° zur Radialrichtung RR bzw. Zylinderhöhe ZH ausgebildet ist. Dabei kann der Durchmesser des Zylinders 30 beispielsweise in Abhängigkeit einer Größe einer bestimmten Querschnittsfläche der Laufschaufel gewählt werden, beispielsweise könnte der Durchmesser des Zylinders die Hälfte der Dicke einer Querschnittsfläche betragen, wobei die Dicke der Querschnittsfläche beispielsweise in einer zur axialen Richtung AR der Gasturbine senkrechten und den Schwerpunkt 24 schneidenden Dickenrichtung DR gemessen werden kann, wie dies in Fig. 4 angedeutet ist, wobei die Dickenrichtung DR auch als Tangentiale zur Umfangsrichtung der Gasturbine verstanden werden kann. Dies ist allerdings nur ein vereinfachtes Beispiel. Der Durchmesser des Zylinders 30 kann auch abhängig von anderen Größen bzw. Parametern der Laufschaufel gewählt werden. Der Durchmesser kann insbesondere auch auf einen beliebigen Wert festgelegt werden, der nicht zwingend mit geometrischen Maßen der Laufschaufel einen Zusammenhang hat. Beim Zylinder ist es besonders bevorzugt, wenn er in axialer Richtung in der Strömungsrichtung von Heißgas geneigt ist. Hierdurch kann das an der Verbindungsstelle des Schaufelblatts bzw. Strahlablenkungsabschnitts mit dem Schaufelfußelement resultierende Biegemoment, das sich aus Fliehkräften und Druckkräften der Strömung ergibt, möglichst klein gehalten werden.

Fig. 4 zeigt beispielhaft zwei überlagerte Konturen von Laufschaufelquerschnittsflächen auf Höhe der Linien S1 bzw. Sn gemäß Fig. 1. Wie aus dieser Darstellung ersichtlich, weicht der Schwerpunkt 24' der Querschnittsfläche auf Höhe Sn (gestrichelte Kontur) vom Schwerpunkt 24 der Querschnittsfläche 20 auf Höhe S1 ab. Die nicht eingezeichnete Fädelachse 26 verläuft durch diese zwei Schwerpunkte 24, und 24' und ist somit gegenüber einer Radialrichtung, die in Fig. 4 orthogonal zur Papierebene durch den Schwerpunkt 24 verläuft, geneigt, wobei der zwischen Radialrichtung und Fädelachse eingeschlossenen Winkel größer oder gleich 0,25° und kleiner oder gleich 1° ist. In Fig. 4 ist ferner durch den Kreis 32 die durch einen Kegel 28 bzw. einen schiefen Zylinder 30 festgelegte Begrenzung ersichtlich, innerhalb derer die Schwerpunkte aller Querschnittsflächen des Laufschaufelrades angeordnet sind.

Es wird darauf aufmerksam gemacht, dass die gezeichneten Winkel bzw. Neigungen aus Gründen der besseren Darstellung überzeichnet sind und nicht den bevorzugten Winkelbere ichen entsprechen. Die gewählten Darstellungen dienen dazu, das Prinzip der geometrischen Zusammenhänge zu erläutern, ohne dass dabei eine maßgenaue bzw. maßstabsgetreue Wiedergabe erreicht wird.

Durch die hier vorgestellte Auslegung einer Laufschaufel, deren Schwerpunkte der Flächenquerschnitte entlang einer zur radialen Richtung nur gering geneigten Fädelachse angeordnet sind, kann für eine schnell laufende Niederdruckturbine einer Fluggasturbine eine optimierte Laufschaufelauslastung bzw. -belastung ohne lokale Spannungsspitzen erreicht werden. Durch die gewählte Abweichung der Fädelachse von der radialen Richtung wird eine gleichmäßigere Belastung erreicht, wobei die Erfinder erkannt haben, dass bei schnell laufenden Niederdruckturbinen die Abweichungen von der radialen Richtung (bzw. einer rein radialen Fädelung) eng zu begrenzen sind.

### Bezugszeichenliste

- 10: Laufschaufel
- 12: Schaufelfußelement
- 14: Deckbandelement
- 16: Strahlablenkungsabschnitt
- 18: Übergangsbereich
- 20: Querschnittsfläche
- 22: Außenkontur
- 24: Schwerpunkt
- 26: Fädelachse
- 28: Kegel
- 30: Zylinder
- 32: Kreis
- β: Öffnungswinkel Kegel
- ϕ: Winkel Zylinderachse
- AR: Axialrichtung
- DR: Dickenrichtung
- KH: Kegelhöhe
- RR: Radialrichtung
- ZA: Zylinderachse
- ZH: Zylinderhöhe

## Patentansprüche

1. Laufschaufel für eine Fluggasturbine, mit
einem Schaufelfußelement (12) und
einem Strahlablenkungsabschnitt (16), der sich in eine Radialrichtung (RR) an das Schaufelfußelement (12) anschließt,
wobei jeweilige Schwerpunkte (24, 24') von Schaufelquerschnittsflächen (20) des Strahlablenkungsabschnitts (16) auf einer gemeinsamen Fädelachse (26) liegen,
wobei die Fädelachse (26) im angebrachten Zustand der Laufschaufel (10) an der Gasturbine bezogen auf die radiale Richtung (RR) in Gasströmungsrichtung in axialer Richtung (AR) und/oder in Umfangsrichtung der Gasturbine geneigt ist, und
wobei die Laufschaufel für den Einsatz in einer schnell laufenden Niederdruckturbine geeignet ist, die mittels eines Untersetzungsgetriebes mit einem Fan der Fluggasturbine verbunden ist,
**dadurch gekennzeichnet,**
**dass** die Fädelachse (26) ausgehend von einem sich an das Schaufelfußelement (12) anschließenden ersten Schwerpunkt (24) einer ersten Schaufelquerschnittsfläche (20) sich innerhalb eines Kegels (28) erstreckt, dessen Kegelspitze im ersten Schwerpunkt (24) liegt und dessen Kegelhöhe (KH) sich orthogonal zur Ebene der Schaufelquerschnittsflächen (20) erstreckt, wobei sich die Kegelhöhe (KH) im angebrachten Zustand der Laufschaufel (10) an der Fluggasturbine in radialer Richtung (RR), welche radialer Richtung (RR) durch den ersten Schwerpunkt (24) verläuft, der Fluggasturbine erstreckt,
wobei der Öffnungswinkel (β) des Kegels (28) größer als oder gleich 0,5° und kleiner oder gleich 2° beträgt und wobei sich die Fädelachse (26) ausgehend von dem sich an das Schaufelfußelement (12) anschließenden ersten Schwerpunkt (24) einer ersten Schaufelquerschnittsfläche (20) innerhalb einer Mantelfläche des Kegels (28) erstreckt.

2. Laufschaufel nach Anspruch 1, **dadurch gekennzeichnet, dass** sich die Fädelachse (26) ausgehend vom ersten Schwerpunkt (24) linear innerhalb des Kegels (28) erstreckt.

3. Laufschaufel nach einem der vorhergehenden Ansprüche, **dadurch gekennzeichnet, dass** die Laufschaufel ferner ein Deckbandelement (14) umfasst, und dass auch die Schwerpunkte von Querschnittsflächen des Deckbandelements (14) auf der Fädelachse (26) angeordnet sind.

4. Fluggasturbine, umfassend wenigstens eine Turbinenstufe mit einem Rotor, an dem in Umfangsrichtung mehrere nebeneinander angeordnete Laufschaufeln (10) gemäß einem der vorhergehenden Ansprüche angebracht sind wobei die wenigstens eine Turbinenstufe Teil einer Niederdruckturbine ist, und wobei die Niederdruckturbine mittels eines Untersetzungsgetriebes mit dem Fan der Fluggasturbine gekoppelt ist.

5. Fluggasturbine nach Anspruch 4, **dadurch gekennzeichnet, dass** die jeweiligen Fädelachsen (26) der Laufschaufeln (10) zu einer jeweiligen radial durch den ersten Schwerpunkt (24) der ersten Schaufelquerschnittsfläche (20) verlaufenden Geraden gleich geneigt sind.

## Claims

1. Rotor blade for an aircraft gas turbine, comprising
a blade root element (12) and
a stream deflection portion (16)which adjoins the blade root element (12) in a radial direction (RR),
respective centers of gravity (24, 24') of blade cross-sectional areas (20) of the stream deflection portion (16) lying on a common thread axis (26),
the thread axis (26) being inclined, in the attached state of the rotor blade (10) on the gas turbine relative to the radial direction (RR) in the gas flow direction, in the axial direction (AR) and/or in the circumferential direction of the gas turbine, and
the rotor blade being suitable for use in a high-speed low-pressure turbine which is connected to a fan of the aircraft gas turbine by means of a reduction gear, **characterized in that**
the thread axis (26), starting from a first center of gravity (24) of a first blade cross-sectional area (20) adjoining the blade root element (12), extending within a cone (28), the cone tip of which lies in the first center of gravity (24) and the cone height (KH) of which extends orthogonally to the plane of the blade cross-sectional areas (20), the cone height (KH), in the attached state of the rotor blade (10) on the aircraft gas turbine, extending in the radial direction (RR) of the aircraft gas turbine, which radial direction (RR) extends through the first center of gravity (24),
the opening angle (β) of the cone (28) being greaterthan or equal to 0.5° and smaller than or equal to 2°, and the thread axis (26), starting from the first center of gravity (24) of a first blade cross-sectional area (20) adjoining the blade root element (12), extending within a lateral surface of the cone (28).

2. Rotor blade according to claim 1, **characterized in that** the thread axis (26), starting from the first center of gravity (24), extends linearly within the cone (28).

3. Rotor blade according to either of the preceding claims, **characterized in that** the rotor blade further comprises a shroud element (14), and **in that** the centers of gravity of cross-sectional areas of the shroud element (14) are also arranged on the thread axis (26).

4. Aircraft gas turbine, comprising at least one turbine stage having a rotor on whi ch a plurality of rotor blades (10) according to any of the preceding claims arranged next to one another in the circumferential direction are attached, wherein the at least one turbine stage is part of a low-pressure turbine, and wherein the low-pressure turbine is coupled to the fan of the aircraft gas turbine by means of a reduction gear.

5. Aircraft gas turbine according to claim 4, **characterized in that** the respective thread axes (26) of the rotor blades (10) are inclined equally to a relevant straight line extending radially through the first center of gravity (24) of the first blade cross-sectional area (20).

## Revendications

1. Aube mobile destinée à une turbine à gaz d'aéronef, comportant
un élément de pied d'aube (12) et
une portion de déviation de faisceau (16) qui jouxte l'élément de pied d'aube (12) dans une direction radiale (RR),
dans laquelle les foyers respectifs (24, 24') des surfaces de section transversale d'aube (20) de la portion de déviation de faisceau (16) se trouvent sur un axe de filetage (26) commun,
dans laquelle l'axe de filetage (26) est incliné, à l'état monté de l'aube mobile (10) sur la turbine à gaz par rapport à la direction radiale (RR), en direction d'écoulement des gaz dans la direction axiale (AR) et/ou en direction circonférentielle de la turbine à gaz, et
dans laquelle l'aube mobile est adaptée à une utilisation dans une turbine basse pression à grande vitesse, laquelle est reliée à une soufflante de la turbine à gaz d'aéronef au moyen d'un réducteur,
**caractérisée en ce**
**que** l'axe de filetage (26) s'étend, à partir d'un premierfoyer (24) d'une première surface de section transversale d'aube (20) jouxtant l'élément de pied d'aube (12), à l'intérieur d'un cône (28), dont la pointe de cône se situe dans le premier foyer (24) et dont la hauteur de cône (KH) s'étend orthogonalement au plan des surfaces de section transversale d'aube (20), la hauteur de cône (KH) s'étendant, à l'état monté de l'aube mobile (10) sur la turbine à gaz d'aéronef en direction radiale (RR) de la turbine à gaz d'aéronef, laquelle direction radiale (RR) passe parle premier foyer (24),
dans laquelle l'angle d'ouverture (β) du cône (28) est supérieurou égal à 0,5° et inférieur ou égal à 2° et l'axe de filetage (26) s'étend, à partir du premier foyer (24) d'une première surface de section transversale d'aube (20) jouxtant l'élément de pied d'aube (12), à l'intérieur d'une surface d'enveloppe du cône (28).

2. Aube mobile selon la revendication 1, **caractérisée en ce que** l'axe de filetage (26) s'étend, à partir du premier foyer (24), linéairement à l'intérieur du cône (28).

3. Aube mobile selon l'une des revendications précédentes, **caractérisée en ce que** l'aube mobile comprend en outre un élément de carénage (14) et que les foyers de surfaces de section transversale de l'élément de carénage (14) sont également disposés sur l'axe de filetage (26).

4. Turbine à gaz d'aéronef, comprenant au moins un étage de turbine comportant un rotor sur lequel sont fixées plusieurs aubes mobiles (10) adjacentes en direction circonférentielle selon l'une des revendications précédentes, l'au moins un étage de turbine faisant partie d'une turbine basse pression, et la turbine basse pression étant accouplée à la soufflante de la turbine à gaz d'aéronef au moyen d'un réducteur.

5. Turbine à gaz d'aéronef selon la revendication 4, **caractérisée en ce que** les axes de filetage (26) respectifs des aubes mobiles (10) sont inclinés de manière identique par rapport à une ligne droite respective passant radialement par le premier foyer (24) de la première surface de section transversale d'aube (20).
